# EUROPEAN PATENT APPLICATION

(11) **EP 4 207 553 A1**
(43) Date of publication of application: **05.07.2023**
(21) Application number: 21861466.7
(22) Date of filing: 23.08.2021
(51) Int. Cl.: H02J 13/00, G06Q 50/06, G06Q 50/10, H02J 7/00, H02J 3/32, H02J 3/38

(54) **INFORMATION PROCESSING DEVICE, INFORMATION PROCESSING METHOD, PROGRAM, AND STORAGE MEDIUM**

(30) Priority: 25.08.2020 JP 2020141868
(71) Applicant: 3DOM ALLIANCE INC., Tokyo 107-0052 (JP)
(72) Inventor: MATSUMURA, Akihiko, Yokohama-shi, Kanagawa 221-0022 (JP); HARADA, Masako, Yokohama-shi, Kanagawa 221-0022 (JP); ARIKAWA, Tomoaki, Yokohama-shi, Kanagawa 221-0022 (JP); SATSUKAWA, Seiji, Yokohama-shi, Kanagawa 221-0022 (JP)
(74) Representative: Winter, Brandl - Partnerschaft mbB
(86) International application number: PCT/JP2021/030724
(87) International publication number: WO 2022/045040

(57) **Abstract**

One embodiment of the present invention provides an information processing device. The information processing device includes a display controller. The display controller performs control to display the location in which a self-propelled battery apparatus, positioned within a prescribed area, is present, as an object representing the battery apparatus on a map representing the prescribed area or a part thereof. The object indicates the power generation origin of electric power with which the battery apparatus corresponding to the object has been charged.

## Description

### TECHNICAL FIELD

The present invention relates to an information processing apparatus, an information processing method, a program, and a storage medium.

### RELATED ART

In recent years, as a result of the deregulation of electric power industry, new operator has emerged in the electric power business. Currently, electric power is supplied to a user by electric power a company, which is the mainstream. In the near future, it is expected that electric power will be exchanged between users. For example, it is conceivable that a user who have an excess power amount relative to his/her planned usage will meet a demand of other user to maintain a balance between supply and demand of electricity. In this case, it is conceivable that a user who is supplied with electric power may have a need to purchase renewable energy from other user to charge his/her battery.

Patent Document 1 discloses a technology for easily specifying a power generation origin of power charge amount even when charging from a power system with a mixture of commercial power and renewable energy power.

### PRIOR ART DOCUMENTS

### Patent Document

[Patent Document 1] JP 2014-192981 A

### SUMMARY OF INVENTION

### Problems to be Solved by Invention

Instead of supplying power using a power transmission line, which is widely practiced in the world, a system supplying electric power (hereinafter referred to as "power") using a plurality of battery apparatuses self-propelled within a predetermined area is considered in the present invention. With the technology of Patent Document 1, it is not possible to know where the self-propelled battery apparatus is located within the predetermined area. Further, it is also not possible to ascertain a power generation origin of the self-propelled battery apparatus.

### Means for Solving Problems

According to an aspect of the present invention, an information processing apparatus is provided. The information processing apparatus comprises a display controller. The display controller is configured to control to display a location of a self-propelled battery apparatus that is located within a predetermined area as an object indicating the battery apparatus on a map showing the predetermined area or part thereof. The object indicates a power generation origin of power charged in a battery apparatus corresponding to the object.

### BRIEF DESCRIPTION OF DRAWINGS

FIG. 1 is a diagram showing an example of a system configuration of an information processing system.
FIG. 2 is a diagram showing an example of a hardware configuration of a battery apparatus.
FIG. 3 is a diagram showing an example of a hardware configuration of a PC.
FIG. 4 is a diagram showing an example of a functional configuration of a battery apparatus.
FIG. 5 is a diagram showing an example of battery apparatus data.
FIG. 6 is a diagram showing an example of power supply data when power is supplied from a power supply apparatus to a battery apparatus.
FIG. 7 is a diagram showing an example of power storage amount DB (Case 1).
FIG. 8 is a diagram showing an example of power storage amount DB (Case 2).
FIG. 9 is a diagram illustrating count of charge/discharge amount (Case 1).
FIG. 10 is a diagram illustrating count of charge/discharge amount (Case 2).
FIG. 11 is a diagram showing an example of a display screen displayed by a display controller.
FIG. 12 is a diagram showing an example of a text display of a power generation origin of charged power in a pie chart.
FIG. 13 is a flowchart showing an example of information processing regarding reception and accumulation of battery apparatus data in a battery apparatus.
FIG. 14 is a flowchart showing an example of information processing regarding display control in a battery apparatus.
FIG. 15 is a diagram showing an example of a display screen displayed by a display controller according to a first variation.
FIG. 16 is a diagram showing an example of a display screen displayed by a display controller according to a second variation.
FIG. 17 is a diagram showing an example of a system configuration of an information processing system according to a third variation.
FIG. 18 is a diagram showing an example of a hardware configuration of a server apparatus.
FIG. 19 is a diagram showing an example of a functional configuration of a server apparatus.

### DESCRIPTION OF EMBODIMENTS

Hereinafter, embodiment of the present invention will be described with reference to the drawings. Various features described in the embodiment below can be combined with each other.

A program for realizing a software in the present embodiment may be provided as a non-transitory computer readable medium that can be read by a computer or may be provided for download from an external server or may be provided so that the program can be activated on an external computer to realize functions thereof on a client terminal (so-called cloud computing).

In the present embodiment, the "unit" may include, for instance, a combination of hardware resources implemented by a circuit in a broad sense and information processing of software that can be concretely realized by these hardware resources. Further, various information is performed in the present embodiment, and the information can be represented by, for instance, physical values of signal values representing voltage and current, high and low signal values as a set of binary bits consisting of 0 or 1, or quantum superposition (so-called qubits), and communication/calculation can be performed on a circuit in a broad sense.

Further, the circuit in a broad sense is a circuit realized by combining at least an appropriate number of a circuit, a circuitry, a processor, a memory, or the like. In other words, it is a circuit includes application specific integrated circuit (ASIC), programmable logic device (e.g., simple programmable logic device (SPLD), complex programmable logic device (CPLD), field programmable gate array (FPGA)), or the like.

### <First embodiment>

Hereinafter, a first embodiment will be described.

### 1. System configuration

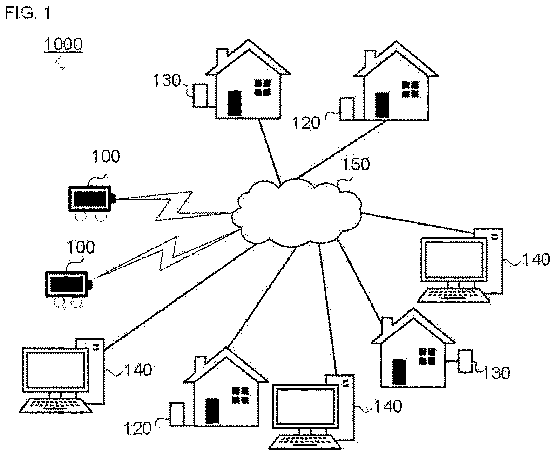

FIG. 1 is a diagram showing an example of a system configuration of an information processing system 1000. The information processing system 1000 comprises a plurality of battery apparatuses 100, a plurality of storage batteries 120 that receive power from the battery apparatus 100, a plurality of power supply apparatuses 130 that supply power to the battery apparatus 100, and a PC (Personal Computer) 140 used by a user of the storage battery 120. The plurality of battery apparatuses 100, the plurality of storage batteries 120, the plurality of power supply apparatuses 130, and the PC 140 are mutually communicatively connected via a network 150. The battery apparatus 100, as shown in FIG. 1, is an apparatus that includes a wheel and self-propelled within a predetermined area using its own power. The battery apparatus 100 supplies power to the storage battery 120 or other battery apparatus 100 in the area. The battery apparatus 100 receives power from the power supply apparatus 130 or other battery apparatus 100 in the area. In the present embodiment, description is given assuming that the user uses the PC 140 to control the battery apparatus 100, the storage battery 120, or the power supply apparatus 130, but it is not limited to PC. A smartphone or a tablet computer may be applied instead of the PC. The battery apparatus 100 is an example of an information processing apparatus.

Each of the plurality of storage batteries 120 receives power supply from any of the plurality of battery apparatuses 100. A device receiving power supply from the battery apparatus 100 is not limited to the storage battery, but may be a battery-powered vehicle, a motorized vehicle such as motorcycle, bicycle, or boat, a device such as electrical appliances with charging function, or other battery apparatus 100. The device receiving power supply from the battery apparatus 100 may receive power supply directly from the battery apparatus 100 or may receive power supply from the battery apparatus 100 via some other device. The storage battery 120 is an apparatus that supplies power to household appliance.

The plurality of power supply apparatuses 130 charge the plurality of battery apparatuses 100, respectively. The device that charges each of the plurality of battery apparatuses 100 is not limited to the storage battery 120, but may be a battery-powered vehicle, a motorized vehicle such as motorcycle, bicycle, or boat, a device such as electrical appliances with charging function, or other battery apparatus 100. The power supply apparatus 130 that supplies power to the battery apparatus 100 may supply power directly to the battery apparatus 100 or may supply power to the battery apparatus 100 via some other device. The information processing system 1000 includes a plurality of power supply apparatuses 130, each of the plurality of power supply apparatuses 130 accumulate at least one or more origins of power and supply the accumulated power to the battery apparatus 100. The origin of power indicates, for example, how power is generated, such as power based on thermal power generation, power based on wind power generation, power based on nuclear power generation, power based on solar power generation, etc.

Here, the storage battery 120 may include a function of the power supply apparatus 130, or the power supply apparatus 130 may include a function of the storage battery 120.

In the present embodiment, it is assumed that a user is receiving power supply from another battery apparatus 100 to the storage battery 120 or his/her own battery apparatus 100 to run appliances and other items in a house. The battery apparatus 100 may be owned by the user through purchase or borrowing or may be owned by a third party. Here, when the user owns the battery device 100, for instance, during a daytime when the user is away from home or at night when the user is asleep and rarely uses power, the battery apparatus 100 can be moved to a location of another user who needs power and perform power supply. Or, the battery apparatus 100 owned by another user can be asked to come to the house to provide power. If the user uses too much power and runs out of power, the battery apparatus 100 can be driven to a location of another user who has excess power and charged by the other user. Or, it is also possible to have the battery apparatus 100 owned by another user come and charge.

### 2. Hardware configuration

### (1) Hardware configuration of battery apparatus 100

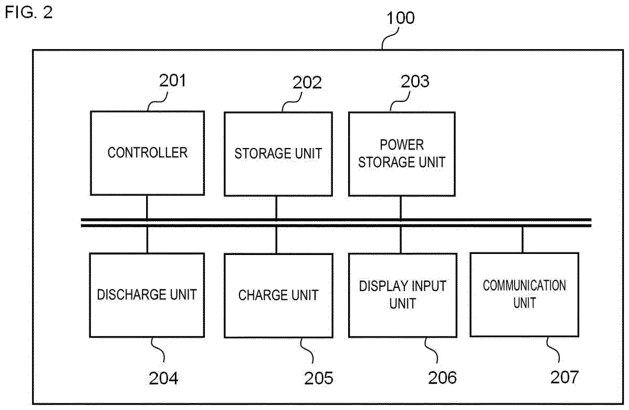

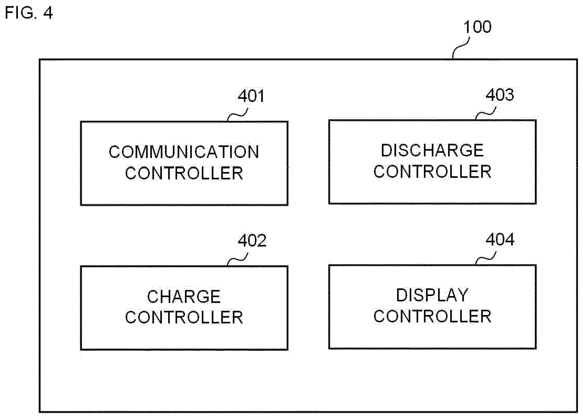

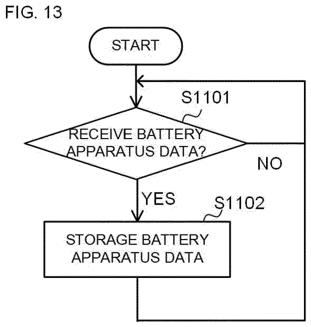

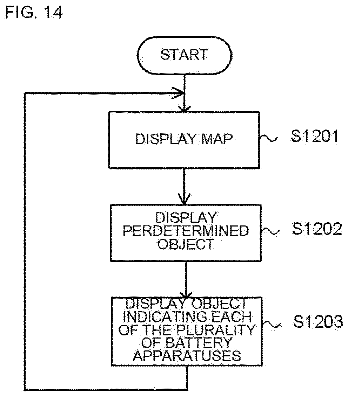

FIG. 2 is a diagram showing a hardware configuration of the battery apparatus 100. The battery apparatus 100 comprises a controller 201, a storage unit 202, a power storage unit 203, a discharge unit 204, a charge unit 205, a display input unit 206, and a communication unit 207 as a hardware configuration. The controller 201 controls the entire battery apparatus 100. The storage unit 202 stores a program of the battery apparatus 100 and data or the like used when the controller 201 performs processing based on the program of the battery apparatus 100. By the controller 201 executing processing based on the program of the battery apparatus 100 stored in the storage unit 202, the battery apparatus 100 having a functional configuration shown in FIG. 4 below can realize processing of the flowcharts shown in FIGS. 13 and 14. The storage unit 202 is an example of storage medium.

The power storage unit 203 accumulates power charged via the charge unit 205. That is, the charge unit 205 receives power supply from a power source, e.g., the storage battery 120, and accumulates power in the power storage unit 203. Here, the power storage unit 203 can accumulate power of a plurality of origins. The discharge unit 204 supplies the power accumulated in the power storage unit 203 to other apparatus, e.g., the storage battery 120. The display input unit 206 displays information and inputs operation information to the controller 201 in response to user operation. The communication unit 207 connects the battery apparatus 100 to the network 150 and controls communication with other apparatus.

### (2) Hardware configuration of PC140

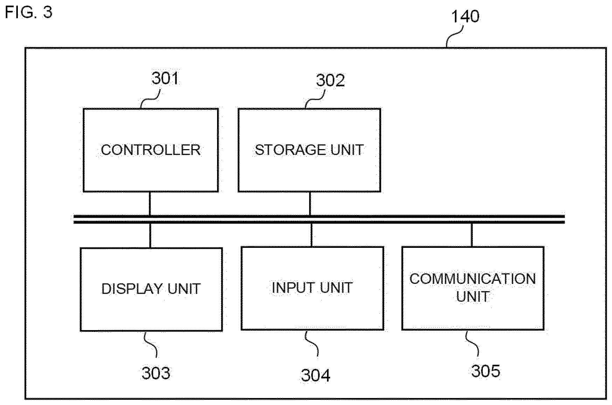

FIG. 3 is a diagram showing an example of a hardware configuration of the PC 140. The PC 140 comprises a controller 301, a storage unit 302, a display unit 303, an input unit 304, and a communication unit 305. The controller 301 controls the entire PC140. The storage unit 302 stores a program of the PC 140 and data or the like used by the controller 301 to execute processing based on the program of the PC 140. A function of the PC 140 is realized when the controller 301 executes processing based on the program of the PC 140 stored in the storage unit 302. The input unit 304 inputs operation information to the controller 301 in response to user operation. The display unit 303 displays a screen or the like generated by the controller 301. The communication unit 305 connects the PC 140 to the network 150 and controls communication with other apparatus.

### 3. Functional configuration

### (1) Functional configuration of battery apparatus 100

FIG. 4 is a diagram showing an example of a functional configuration of the battery apparatus 100. The battery apparatus 100 comprises a communication controller 401, a charge controller 402, a discharge controller 403, and a display controller 404 as functional configuration.

The communication controller 401 controls communication between the battery apparatus 100 and other apparatus. The other apparatus includes, for example, other battery apparatus 100, the storage battery 120, and the power supply apparatus 130.

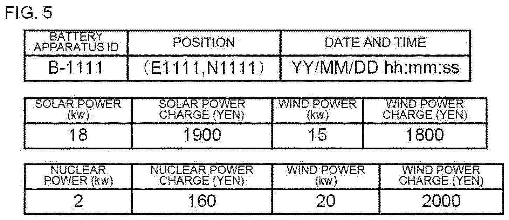

FIG. 5 is a diagram showing an example of battery apparatus data generated by the battery apparatus 100. The battery apparatus data includes a battery apparatus ID uniquely assigned to each battery apparatus 100, position, date and time, power generation origin, and power charge for each power generation origin. The battery apparatus ID is identification information that identifies the battery apparatus 100. The position is information indicating a current position of the battery apparatus 100, for example, information expressed in longitude and latitude. Date and time indicate date and time when the battery apparatus 100 transmitting battery transmission data. The power generation origin is information indicating how the power stored in the battery apparatus 100 is generated, i.e., solar, wind, nuclear, thermal, or the like. The power charge for each power generation origin is a charge for the power stored in the battery apparatus 100 divided by the power generation origin. Details on the power generation origin and the power charge will be described later. Unit price of power for each power generation origin may be included in the battery apparatus data. Here, the charge or unit price of power may be arbitrarily determined by the battery apparatus 100 based on a price at which the power charged so far has been purchased.

For example, the communication controller 401 periodically transmits battery apparatus data to other battery apparatus 100. The communication controller 401 also periodically receives battery apparatus data from other battery apparatus 100. More specifically, the communication controller 401 receives battery apparatus data from each of the plurality of other communicable battery apparatuses 100. As another example, the communication controller 401 may transmit a transmission request for battery apparatus data to other battery apparatus 100 that is within a communication range. Here, the transmission request may be transmitted periodically from the communication controller 401, or may be transmitted from the communication controller 401 triggered by a fact that power storage amount is getting low. The other battery apparatus 100 that receives the transmission request for battery apparatus data may then transmit the battery apparatus data to the battery apparatus 100 that transmitted the transmission request.

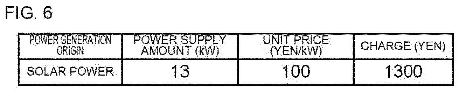

FIG. 6 shows an example of power supply data transmitted from the power supply apparatus 130 to the battery apparatus 100 when power is supplied from the power supply apparatus 130 to the battery apparatus 100. The power supply data includes power generation origin, power supply amount, unit price, and charge. The power generation origin is information indicating a power generation origin of power supplied from the power supply apparatus 130 that is a power supply source. The power supply amount is an amount of supplied power. The unit price is a unit price of supplied power, e.g., price per kW. The charge is a price of supplied power and is calculated from the amount of supplied power and the unit price.

When power is supplied from the power supply apparatus 130, the communication controller 401 receives power supply data shown in FIG. 6 from the power supply apparatus 130. Here, the power supply apparatus 130 may be another battery apparatus. The charge controller 402 controls charging of power from the power supply apparatus 130 to the battery apparatus 100. When the communication controller 401 receives the power supply data shown in FIG. 6 from the power supply apparatus 130, the charge controller 402 updates the power storage amount DB (Data base) based on the power supply data. The power storage amount DB is a database showing details of power information stored by the battery apparatus 100, and is stored in the storage unit 202.

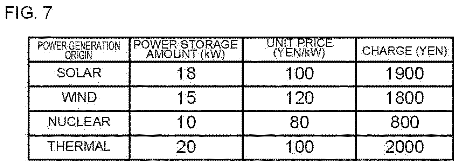

FIG. 7 is a diagram showing an example of power storage amount DB (Case 1). The power storage amount DB includes power generation origin, power storage amount, unit price, and charge as items. The power generation origin is information that identifies a power generation origin of power stored by the battery apparatus 100. The power storage amount is an amount of stored power. The unit price is a unit price of stored power. Here, the unit price may be an average unit price of power supplied so far. That is, the unit price may be calculated from a total cost of supplying power and a total amount of power supplied for each power generation origin. Further, the unit price may be a highest or lowest unit price in power supplied so far. The charge is a charge for stored power and is calculated for each generation origin from the power storage amount and the unit price. In the example shown in FIG. 7, solar, wind, nuclear, and thermal power are shown as power generation origins.

The discharge controller 403 controls discharge of power from the battery apparatus 100 to other battery apparatus 100 and the storage battery 120, etc. For instance, when the battery apparatus 100 discharges power to the storage battery 120, the discharge controller 403 updates the power storage amount DB based on origin and amount of the discharged power.

Here, even when the battery apparatus 100 uses power for self-propelling, the discharge controller 403 updates the power storage amount DB. In this case, the discharge controller 403 controls which power is to be used among the stored power. For example, the discharge controller 403 uses power of a specified origin based on setting information set by the user of the battery apparatus 100 via the display input unit 206 or the like. As another example, the discharge controller 403 uses power that meets a specified condition based on setting information that is predetermined and stored in the storage unit 202, etc. For example, the setting information includes condition such as "use power with the lowest unit price first", "use nuclear, solar, wind, and thermal power in order of priority", or the like.

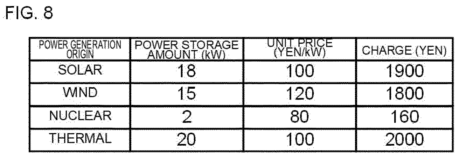

FIG. 8 is a diagram showing an example of power storage amount DB (Case 2). Specifically, FIG. 8 shows the power storage amount DB after the battery apparatus 100 supplies power to the storage battery 120 or other battery apparatus 100 from the state shown in FIG. 7. More specifically, in the example shown in FIG. 8, power storage amount of nuclear energy is reduced by 8kW from the example shown in FIG. 7 (state before power supply). That is, the example of FIG. 8 shows that when discharging to the storage battery 120, supply of power generated from nuclear power is requested and 8kW of the power generated from nuclear power is discharged.

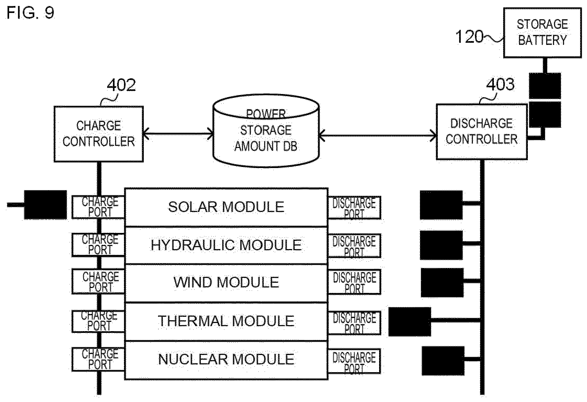

FIG. 9 is a diagram illustrating count of charge/discharge amount and power storage amount (Case 1). In the example shown in FIG. 9, a plurality of power storage modules comprising a charging connector (charge port) for each power generation origin are provided in the power storage unit 203. The charge controller 402 specifies the charging module to be charged, and thus the power generation origin of the charged power, depending on which charging connector the power supply apparatus 130 or other battery apparatus 100 (not shown in the figure) is connected to, and manages charge amount for each power generation origin. Further, the discharge controller 403 manages discharge amount for each power generation origin by determining the power storage module performing discharge based on the setting information, etc., connecting to the discharge connector (discharge port) of the determined power storage module, and performing discharge processing to the storage battery 120 connected via the connector with the discharge controller 403. Here, the storage battery 120 may be another battery apparatus 100. In this way, by charging from the charging connector (charge port) provided for each power storage module and discharging from the discharging connector provided for each power storage module, it is possible to grasp the charge/discharge amount and the power storage amount for each power storage module.

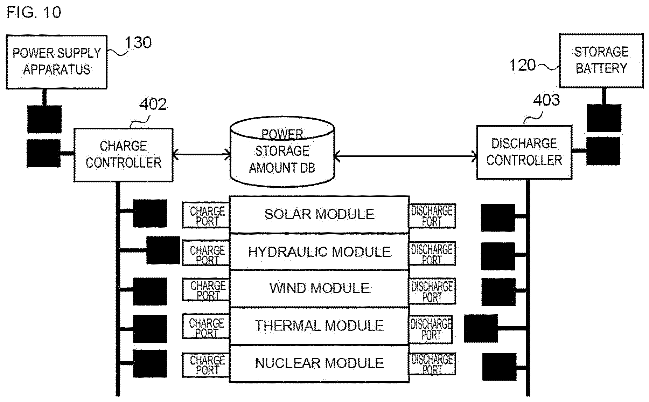

FIG. 10 is a diagram illustrating count of charge/discharge amount (Case 2). The example shown in FIG. 10 differs from the example shown in FIG. 9 in that there is one power supply connector (charge port) and the charge controller 402 controls the power storage module to which it is connected. That is, the charge controller 402 is connected to the storage battery 120 or other battery apparatus 100 not shown in the figure via a connector, determines the power storage module that charges according to the power generation origin indicated in the power supply data received when power is supplied, and performs internal processing to connect to the power storage module. Then, the charged power storage module, i.e., the power generation origin, and the stored power storage amount are recorded in the power storage amount DB. In addition, the discharge controller 403 determines the power storage module that charges based on the setting information, etc., and manages discharge amount regarding the power storage module that has performed discharge. In other words, the discharge controller 403 determines the power storage module that charges based on the setting information, etc., connects the power storage module to the discharge connector (discharge port) in an internal process, and records the discharged power storage module and the discharged power amount in the power storage amount DB. In this way, by using one charging connector (charge port) for charging, it is no longer necessary to provide a plurality of charging connectors (charge ports), thus more power storage modules can be installed compared to the second variation shown in FIG. 9.

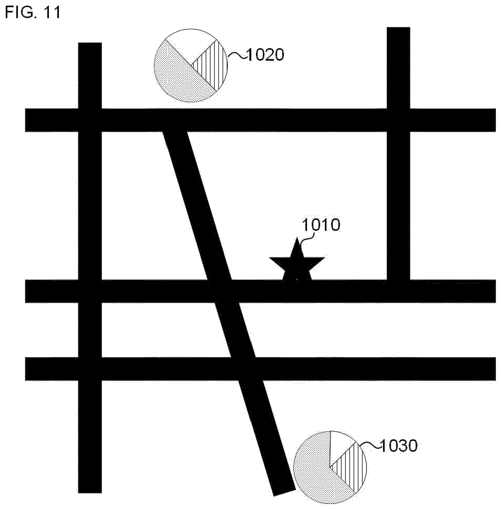

FIG. 11 is a diagram showing an example of a display screen displayed by the display controller 404. The display controller 404 controls the display input unit 206 to display a map within a predetermined area. The display controller 404 controls a location of the battery apparatus that is located within the predetermined area and self-propelled to be displayed as an object indicating the battery apparatus on the map showing the predetermined area or a part thereof. Here, the object indicates the power generation origin of power charged to the battery apparatus corresponding to the object. In addition, the display controller 404 controls the display of the battery apparatus based on the battery apparatus data received through communication with the other battery apparatus 100, etc., and folded onto the map in such a manner that position of each of the plurality of other battery apparatuses 100 located in the predetermined area and self-propelled can be recognized. At this time, the display controller 404 changes and displays the object in such a manner that each of the plurality of other battery apparatuses 100 can be identified. Here, the display controller 503 displays the object according to the power generation origin and a ratio regarding power charged in the corresponding battery apparatus 100. An example of the object is an icon or the like. Icon is a symbolic representation of a thing in a simple pictorial form.

In other words, based on the position of the other battery apparatus 100 included in the battery apparatus data, the display controller 404 controls display of the object that can identify each of the plurality of battery apparatuses on a map indicating the location of each of the plurality of battery apparatuses that are located within a predetermined area and self-propelled. Further, the display controller 404 displays the object according to the power generation origin of and ratio of the power stored in the other battery apparatus 100 included in the battery apparatus data.

More specifically with reference to FIG. 11, an object 1010 is an object indicating a position of its own apparatus (the battery apparatus 100 in the example of the present embodiment). An object 1020 and an 1030 indicate position of other battery apparatuses 100 that are located in a predetermined area and self-propelled, as well as power generation origin of power charged in the corresponding battery apparatus 100 and a ratio thereof. The object is displayed in color corresponding to the power generation origin of the power charged in the battery apparatus corresponding to the object. When the battery apparatus 100 is charged with a plurality of power generation origins, the object is displayed according to a proportion of power generation origin of the power charged in the battery apparatus corresponding to the object, as shown in FIG. 11. For instance, the display controller 404 may display a screen shown in FIG. 11 on a display unit of a user apparatus (e.g., the display unit 303 of the PC 140) that exists within a predetermined range.

In the display screen shown in FIG. 11, a user can, for instance, select an object of the battery apparatus 100 that is closer to a location of the own apparatus, or select an object of the battery apparatus 100 that is being charged with power derived from a desired power generation origin.

When an object is selected via the display screen, the communication controller 401 transmits a power supply request including position information of the own apparatus to the battery apparatus 100 corresponding to the selected object. Based on the position information included in the power supply request, the user of the battery apparatus 100 that receives the power supply request including the position information controls the battery apparatus 100 to move toward a location of the own apparatus that transmitted the power supply request.

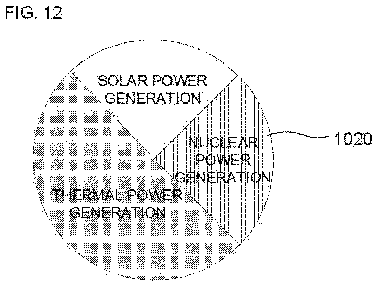

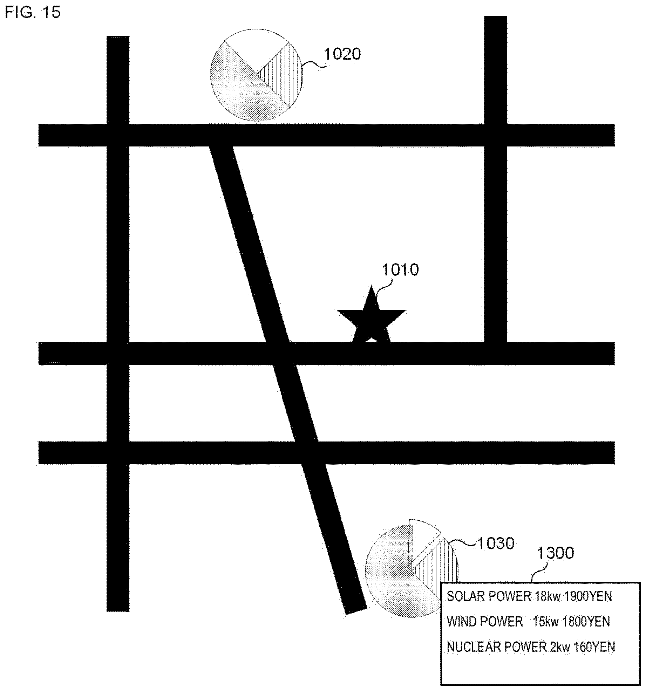

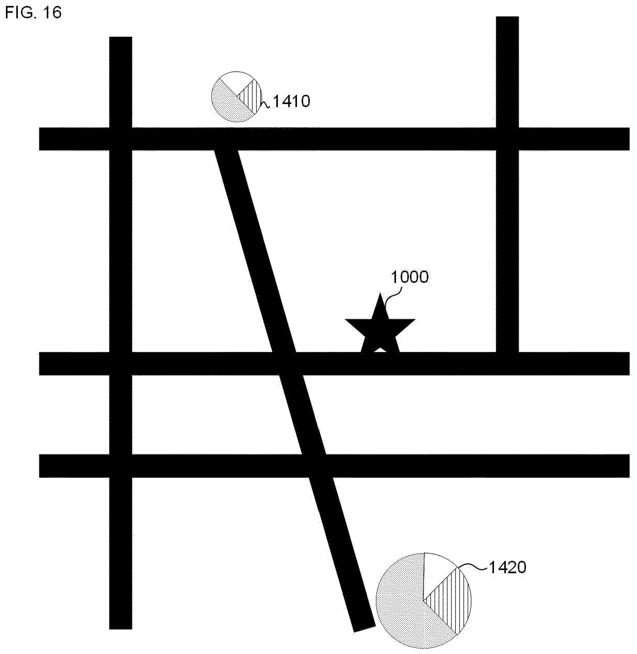

Note that the display controller 404 may display the power generation origin being charged in text in a pie chart shown in FIG. 11. FIG. 12 is a diagram showing an example also displaying power generation origin of the charged power in the pie chart. The same applies to FIGS. 15 and 16, which will be described later.

FIG. 13 is a flowchart showing an example of information processing regarding accumulation in the battery apparatus 100 that received the battery apparatus data.

In S1101, the communication controller 401 determines whether the battery apparatus data has been received by other battery apparatus 100 capable of communication. If the communication controller 401 determines that battery apparatus data has been received, the processing proceeds to S1102, and if the communication controller 401 determines that battery apparatus data has not been received, the processing of S1101 is repeated.

In S1102, the communication controller 401 stores and accumulates the received battery apparatus data in the storage unit 202. Storage in the storage unit 202 is performed for each battery apparatus ID, and when the battery apparatus data is received a plurality of times from the same battery apparatus ID, overwrite processing is performed sequentially. In other words, the latest battery apparatus data for each battery apparatus ID is stored in storage unit 202.

FIG. 14 is a flowchart showing an example of information processing regarding display control in the battery apparatus 100.

In S 1201, the display controller 404 controls in such a manner that a map in a predetermined area is displayed in the display input unit 206. Here, the predetermined area may be a rectangular or arbitrarily shaped area centered on the battery apparatus 100, or may be a predefined rectangular or arbitrarily shaped area in which the battery apparatus 100 exists.

In S1202, the display controller 404 controls display of a predetermined object (star in the example shown in FIG. 11) on the map based on position of the battery apparatus 100.

In S1203, the display controller 404 controls the display of an object indicating each of the plurality of battery apparatuses on a map indicating position of each of the plurality of battery apparatuses located within the predetermined area and self-propelled based on the position of the other battery apparatus 100 included in the battery apparatus data. Further, the display controller 404 displays the object with different indication according to the power generation origin regarding the power stored in the other battery apparatus 100 included in the battery apparatus data. The other battery apparatus 100 to be displayed on the map may be all the battery apparatuses 100 that exist in the predetermined area, or other battery apparatus 100 that meet a condition specified in advance by the user of the battery apparatuses 100 may be displayed.

Processing of S1201, S1202, and S 1203 may be performed in any order, and may be performed simultaneously.

According to the first embodiment, position of a plurality of battery apparatuses 100 existing within a predetermined area and power generation origin regarding power charged in the battery apparatuses 100 can be quickly ascertained. Therefore, for instance, it is possible to instruct the battery apparatus 100, that exists near a user and is charged with power derived from power generation origin desired by the user, to request power supply.

### <First variation>

Hereinafter, a first variation of the first embodiment will be described. FIG. 15 is a diagram showing an example of a display screen displayed by a display controller 404 of the first variation. When an object is selected by a user and a predetermined operation is performed, the display controller 404 of the first variation displays detailed information 1300 of power charged in the battery apparatus 100 corresponding to the selected object for each power generation origin. As an example of detailed information, in the example in FIG. 15, when object 1030 is selected by the user and the predetermined operation is performed, type of power generation origin, power storage amount for each power generation origin, and charge regarding power stored in the battery apparatus 100 corresponding to the object 1030 are displayed as the detailed information 1300. As another example, the display controller 404 may display a unit price as detailed information instead of charge in the detailed information 1300. Here, the unit price may be an average unit price of power supplied so far. In other words, the unit price may be calculated from cost of supplying power and a total amount of power supplied for each power generation origin. Furthermore, the unit price may be highest or lowest unit price of power supplied so far.

According to the first variation, the detailed information 1300 for each power generation origin regarding power stored for the battery apparatus 100 corresponding to the object displayed on the display screen can be displayed in text on the display screen. Thus, a user can select the battery apparatus 100 after obtaining more detailed information.

### <Second variation>

Hereinafter, a second variation of the first embodiment will be described. FIG. 16 is a diagram showing an example of a display screen displayed by a display controller 404 in the second variation. The display controller 404 changes size of an object and displays the object based on power amount charged in a battery apparatus 100 corresponding to the object. In the example in FIG. 16, an object 1420 is displayed larger than an object 1410 because a battery apparatus 100 corresponding to the object 1420 stored more power that can be supplied than a battery apparatus 100 corresponding to the object 1410.

According to the second variation, the object corresponding to the battery apparatus 100 that has more power than the other battery apparatuses 100 that can be supplied is displayed larger than the object of the other battery apparatus 100, thus a user can select the other battery apparatus 100 having a desired power amount corresponding to a power amount to be charged.

### <Third variation>

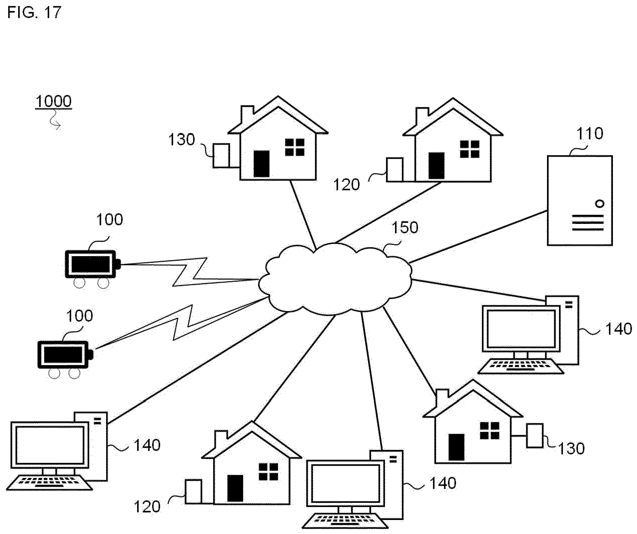

The description till the second variation assumes a configuration in which a battery apparatus 100 communicates individually with the other battery apparatus 100. However, instead of each battery apparatus 100 communicating with each other, a configuration in which each battery apparatus 100 communicates with a server apparatus 110 can also be applied. Hereinafter, a third variation will be described as a system configuration in which the server apparatus 110 is arranged. FIG. 17 is a diagram showing an example of a system configuration of an information processing system 1000 according to the third variation. The information processing system 1000 shown in FIG. 17 further comprises a server apparatus 110 than the information processing system 1000 shown in FIG. 1. The server apparatus 110 is communicatively connected to a plurality of battery apparatuses 100, a plurality of storage batteries 120, and a plurality of power supply apparatuses 130 via a network 150.

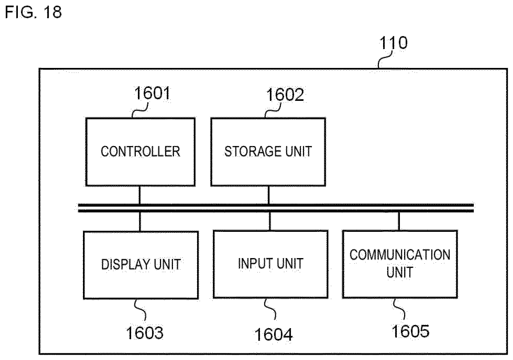

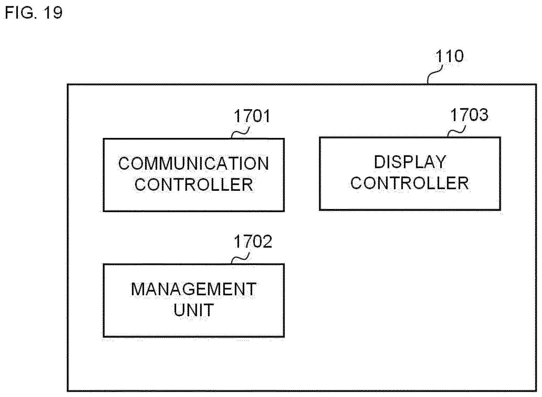

FIG. 18 is a diagram showing an example of a hardware configuration of the server apparatus 110. The server apparatus 110 comprises a controller 1601, a storage unit 1602, a display unit 1603, an input unit 1604, and a communication unit 1605. The controller 1601 controls entire server apparatus 110. The storage unit 1602 stores a program of the server apparatus 110 and data or the like used by the controller 1601 to perform processing based on the program of the server apparatus 110. When the controller 1601 executes processing based on the program of the server apparatus 110 stored in the storage unit 1602, a functional configuration, etc. shown in FIG. 19 later is realized. The storage unit 1602 is an example of a storage medium. The input unit 1604 inputs operation information to controller 1601 in response to user operation. The display unit 1603 displays a screen, etc. generated by the controller 1601. The communication unit 1605 connects the server apparatus 110 to the network 150 and controls communication with other apparatus.

FIG. 19 is a diagram showing an example of the functional configuration of the server apparatus 110. The server apparatus 110 comprises a communication controller 1701, a management unit 1702, and a display controller 1703 as functional configuration.

The communication controller 1701 controls communication between the server apparatus 110 and other apparatus. The other apparatus includes, for example, a plurality of battery apparatuses 100, a plurality of storage batteries 120, and a plurality of power supply apparatuses 130.

The communication controller 1701 periodically receives battery apparatus data from the plurality of battery apparatuses 100.

As another example, the communication controller 1701 may periodically transmit a transmission request for battery apparatus data to the plurality of battery apparatuses 100 that are within communication range. The plurality of battery apparatuses 100 that receive the transmission request for battery apparatus data may then transmit the battery apparatus data to the server apparatus 110 that has transmitted the transmission request.

The management unit 1702 stores, accumulates, and manages the battery apparatus data received by the communication controller 1701 from the plurality of battery apparatuses 100 in the storage unit 1602.

The display controller 1703 controls the display input unit 206 to display a map within a predetermined area. In addition, based on the battery apparatus data received through communication with other battery apparatuses 100 or the like, the display controller 1703 controls to superimpose and display an object indicating each of the plurality of battery apparatuses 100 on the map at a position where each of the plurality of self-propelled battery apparatuses 100 located in the predetermined area exists. Here, the display controller 1703 displays the object differently according to the power generation origin regarding power charged in the corresponding battery apparatuses 100.

The display controller 1703 may generate a display screen shown in FIG. 11, etc. and transmit to each of the plurality of battery apparatuses 100 for display on the display input unit 206, or may transmit data for generating the display screen shown in FIG. 11, etc. to each of the plurality of battery apparatuses 100. The plurality of battery apparatuses 100 that receive the data for generating the display screen generate a display screen based on the received data and display on their respective display input units 206.

Further, each of the plurality of battery apparatuses 100 may be configured to transmit a transmission request for a display screen to the server apparatus 110. Upon receiving the transmission request for the display screen, the server apparatus 110 transmits the display screen to the battery apparatus 100 that has transmitted the transmission request. The plurality of battery apparatuses 100 each may be configured to transmit a transmission request of data for generating a display screen to the battery apparatus 100. The server apparatus 110 that receives the transmission request for data to generate the display screen transmits the data to generate the display screen to the battery apparatus 100 that has transmitted the transmission request. The plurality of battery apparatuses 100 that receive the data for generating a display screen generate a display screen based on the received data and display on their respective display input units 206.

According to the third variation, the server apparatus 110 can manage battery apparatus data of the plurality of battery apparatuses 100, and based on the managed battery apparatus data, the server apparatus 110 can generate and control a display screen to be displayed on the PC 140 owned by a user of each of the plurality of battery apparatuses 100.

Furthermore, according to third variation, data amount exchanged in communication between the plurality of battery apparatuses 100 can be reduced.

In addition, according to the third variation, editing of display screen is performed by the server apparatus 110, making drawing/editing process on the PC 140 owned by the user of each of the plurality of battery apparatuses 100 unnecessary.

### <Fourth variation>

Hereinafter, an example in which a PC 140 functions as an information processing apparatus will be described in a fourth variation. A system configuration of an information processing system 1000 according to the fourth variation is almost equivalent to the system configuration according to the first embodiment shown in FIG. 1. In the fourth variation, the PC 140 is an example of the information processing apparatus. Further, any information processing apparatus may be applied, and instead of the PC 140, a smartphone or a tablet computer may be applied as well.

Moreover, a hardware configuration of the PC 140 according to the fourth variation is almost equivalent to the hardware configuration shown in FIG. 3. Here, the storage unit 302 of the PC 140 stores a program of the PC 140 and data, etc. used when a controller 301 executes processing based on the program of the PC 140. When the controller 301 executes processing based on the program of the PC 140 stored in the storage unit 302, a functional configuration, etc. described later is realized. The storage unit 302 is an example of a storage medium.

The PC 140 comprises a communication controller, a management unit, and a display controller as functional configuration. The functional configuration of the PC 140 is equivalent to the functional configuration of the server apparatus 110 shown in FIG. 19.

The communication controller of the PC 140 controls communication between the PC 140 and other apparatus. The other apparatus includes, for example, a plurality of battery apparatuses 100, a plurality of storage batteries 120, and a plurality of power supply apparatuses 130.

The communication controller of the PC 140 periodically receives battery apparatus data from the plurality of battery apparatuses 100.

As another example, the communication controller of the PC 140 may periodically transmit a transmission request for battery apparatus data to the plurality of battery apparatuses 100 that are within communication range. The plurality of battery apparatuses 100 that receive the transmission request for battery apparatus data may then transmit the battery apparatus data to the PC 140 that has transmitted the transmission request.

The management unit of the PC 140 stores, accumulates, and manages the battery apparatus data received by the communication controller from the plurality of battery apparatuses 100 in the storage unit 302.

The display controller of the PC 140 controls a display unit 303 to display a map within a predetermined area. In addition, based on the battery apparatus data received through communication with other battery apparatuses 100 or the like, the display controller of the PC 140 controls to superimpose and display an object indicating each of the plurality of battery apparatuses 100 on the map at a position where each of the plurality of self-propelled battery apparatuses 100 located in the predetermined area exists. Here, the display controller of the PC 140 displays the object differently according to the power generation origin regarding power charged in the corresponding battery apparatuses 100.

The display controller of the PC 140 may generate the display screen shown in FIG. 11, etc., and display on the display unit 303, or may transmit data for generating the display screen shown in FIG. 11, etc., to each of the plurality of battery apparatuses 100. The battery apparatus 100 that receives the data for generating the display screen from the plurality of battery apparatuses may generate a display screen based on the received data, and a user may use the PC 140 to obtain the generated display screen and display on the display unit 303.

### <Appendix>

The present invention may be provided in each of the following aspects.

The information processing apparatus, wherein: the object is displayed in a color according to the power generation origin of power charged in a battery apparatus corresponding to the object.

The information processing apparatus, wherein: the object is displayed according to a percentage of power generation origin of power charged in a battery apparatus corresponding to the object.

The information processing apparatus, wherein: when the object is selected, the display controller is configured to display detailed information on power charged in a battery apparatus corresponding to the object for each power generation origin.

The information processing apparatus, wherein: the display controller is configured to change size of the object based on a power amount charged in a battery apparatus corresponding to the object.

The information processing apparatus, further comprising: a communication controller configured to receive position information where the battery apparatus exists and power generation origin information of power charged to the battery apparatus; wherein the display controller is configured to control to display a location where the battery apparatus exists as an object indicating the battery apparatus on the map based on the position information, and display the object according to the origin information.

The information processing apparatus, wherein: the communication controller is configured to receive the position information and the origin information from the battery apparatus.

An information processing method executed by the information processing apparatus, comprising: controlling to display a location of a self-propelled battery apparatus that is located within a predetermined area as an object indicating the battery apparatus on a map showing the predetermined area or part thereof; wherein the object indicates a power generation source of power charged in a battery apparatus corresponding to the object.

A program which allows an information processing apparatus to function as a display controller, wherein: the display controller is configured to control to display a location of a self-propelled battery apparatus that is located within a predetermined area as an object indicating the battery apparatus on a map showing the predetermined area or part thereof; the object indicates a power generation source of power charged in a battery apparatus corresponding to the object.

A storage medium readable by an information processing apparatus storing a program, wherein: the program allows the information processing apparatus to function as a display controller; the display controller is configured to control to display a location of a self-propelled battery apparatus that is located within a predetermined area as an object indicating the battery apparatus on a map showing the predetermined area or part thereof; the object indicates a power generation source of power charged in a battery apparatus corresponding to the object.

Of course, the present invention is not limited to the above aspects.

For instance, the present invention may be provided as a non-transitory computer readable media that stores the program described above.

In addition, the above-mentioned first embodiment and variations may be implemented in any combination.

According to the above-described first embodiment, etc., it is possible to ascertain where a self-propelled battery apparatus is within a predetermined area with a smaller amount of communication. In addition, it is also possible to ascertain a power generation origin regarding power of a self-propelled battery apparatus with a smaller amount of communication.

According to the above-described first embodiment, etc., it is possible to ascertain where a self-propelled battery apparatus is within a predetermined area with less information processing. In addition, it is also possible to ascertain a power generation origin regarding power of a self-propelled battery apparatus with less information processing.

Finally, various embodiments of the present invention have been described, but these are presented as examples and are not intended to limit the scope of the invention. The novel embodiment can be implemented in various other forms, and various omissions, replacements, and changes can be made without departing from the abstract of the invention. The embodiment and its modifications are included in the scope and abstract of the invention and are included in the scope of the invention described in the claims and the equivalent scope thereof.

### REFERENCE SIGNS LIST

100: Battery apparatus
110: Server apparatus
120: Storage battery
130: Power supply apparatus
150: Network
201: Controller
202: Storage unit
203: Power storage unit
204: Discharge unit
205: Charge unit
206: Display input unit
207: Communication unit
301: Controller
302: Storage unit
303: Display unit
304: Input unit
305: Communication unit
401: Communication controller
402: Charge controller
403: Discharge controller
404: Display controller
503: Display controller
1000: Information processing system
1010: Object
1020: Object
1030: Object
1300: Detailed information
1410: Object
1420: Object
1601: Controller
1602: Storage unit
1603: Display unit
1604: Input unit
1605: Communication unit
1701: Communication controller
1702: Management unit
1703: Display controller

## Claims

1. An information processing apparatus, comprising:
a display controller configured to control to display a location of a self-propelled battery apparatus that is located within a predetermined area as an object indicating the battery apparatus on a map showing the predetermined area or part thereof; wherein
the object indicates a power generation origin of power charged in a battery apparatus corresponding to the object.

2. The information processing apparatus according to claim 1, wherein:
the object is displayed in a color according to the power generation origin of power charged in the battery apparatus corresponding to the object.

3. The information processing apparatus according to claim 1, wherein:
the object is displayed according to a percentage of power generation origin of power charged in the battery apparatus corresponding to the object.

4. The information processing apparatus according to claim 3, wherein:
when the object is selected, the display controller is configured to display detailed information on power charged in the battery apparatus corresponding to the object for each power generation origin.

5. The information processing apparatus according to any one of claims 1 to 4, wherein:
the display controller is configured to change size of the object based on a power amount charged in the battery apparatus corresponding to the object.

6. The information processing apparatus according to any one of claims 1 to 4, further comprising:
a communication controller configured to receive position information where the battery apparatus exists and power generation origin information of power charged to the battery apparatus; wherein
the display controller is configured to
control to display a location where the battery apparatus exists as an object indicating the battery apparatus on the map based on the position information, and
display the object according to the origin information.

7. The information processing apparatus according to claim 6, wherein:
the communication controller is configured to receive the position information and the origin information from the battery apparatus.

8. An information processing method executed by an information processing apparatus, comprising:
controlling to display a location of a self-propelled battery apparatus that is located within a predetermined area as an object indicating the battery apparatus on a map showing the predetermined area or part thereof; wherein
the object indicates a power generation source of power charged in a battery apparatus corresponding to the object.

9. A program which allows an information processing apparatus to function as a display controller, wherein:
the display controller is configured to control to display a location of a self-propelled battery apparatus that is located within a predetermined area as an object indicating the battery apparatus on a map showing the predetermined area or part thereof;
the object indicates a power generation source of power charged in a battery apparatus corresponding to the object.

10. A storage medium readable by an information processing apparatus storing a program, wherein:
the program allows the information processing apparatus to function as a display controller;
the display controller is configured to control to display a location of a self-propelled battery apparatus that is located within a predetermined area as an object indicating the battery apparatus on a map showing the predetermined area or part thereof;
the object indicates a power generation source of power charged in a battery apparatus corresponding to the object.
